# EUROPEAN PATENT APPLICATION

(11) **EP 2 204 273 A2**
(43) Date of publication of application: **07.07.2010**
(21) Application number: 09180452.6
(22) Date of filing: 22.12.2009
(51) Int. Cl.: B29C 51/16, B29C 51/46

(54) **Vacuum forming machine and method of making vacuum formed product**

(30) Priority: 26.12.2008 JP 2008333755
(71) Applicant: Yamaha Hatsudoki Kabushiki Kaisha, Iwata-shi, Shizuoka-ken 438 (JP)
(72) Inventor: Suzuki, Yasuo, Shizuoka-ken 438-8501 (JP)
(74) Representative: Schoppe, Fritz

(57) **Abstract**

A vacuum forming machine according includes a chamber configured to be loaded with a base member and a decorative sheet, a frame arranged to surround the base member that has been loaded into the chamber, a pressure reducer arranged to reduce the pressure inside the chamber, and a communication path arranged to establish communication between the inside of the frame and an external space at the atmospheric pressure.

## Description

### BACKGROUND OF THE INVENTION

### 1. Field of the Invention

The present invention relates to a vacuum forming machine for attaching a decorative sheet onto a base member under a reduced pressure and also relates to a method of making such a vacuum formed product.

### 2. Description of the Related Art

Recently, it was proposed, as an alternative decorating technique to painting, that a decorative sheet be attached to the surface of a base member. A base member decorated with a decorative sheet can be recycled more easily than a painted one. In addition, the decorated member can have a different type of fine appearance from that of a painted one, thus contributing to improving its decorativeness, too.

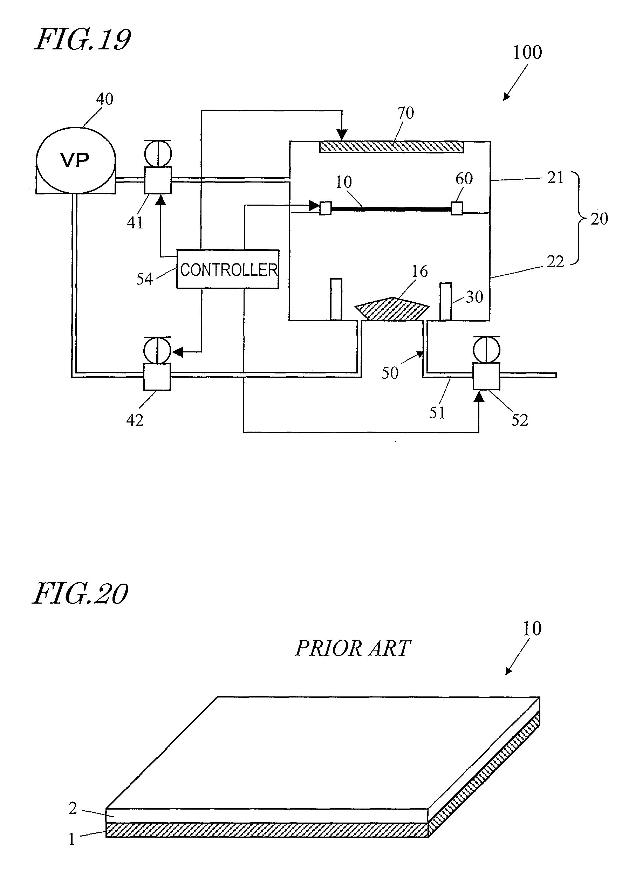

FIG. 20 illustrates an example of a decorative sheet. The decorative sheet 10 shown in FIG. 20 includes a decoration layer 1 and a supporting layer 2 that supports the decoration layer 1. Examples of the decoration layer 1 include an ink layer that has been formed by printing and a metal layer that has been formed by depositing a metallic material. The supporting layer 2 is made of a resin material such as polyvinyl chloride (PVC). When the decorative sheet 10 is attached onto the base member, an adhesive is applied onto the surface of the decorative sheet 10.

Such a decorative sheet 10 is attached onto a base member while the decorative sheet 10 is being formed under a reduced pressure so as to trace the surface shape of the base member. A vacuum forming machine for forming and attaching a decorative sheet in this manner is disclosed in Japanese Patent Application Laid-Open Publications No. 2006-7422 and No. 63-214424, for example.

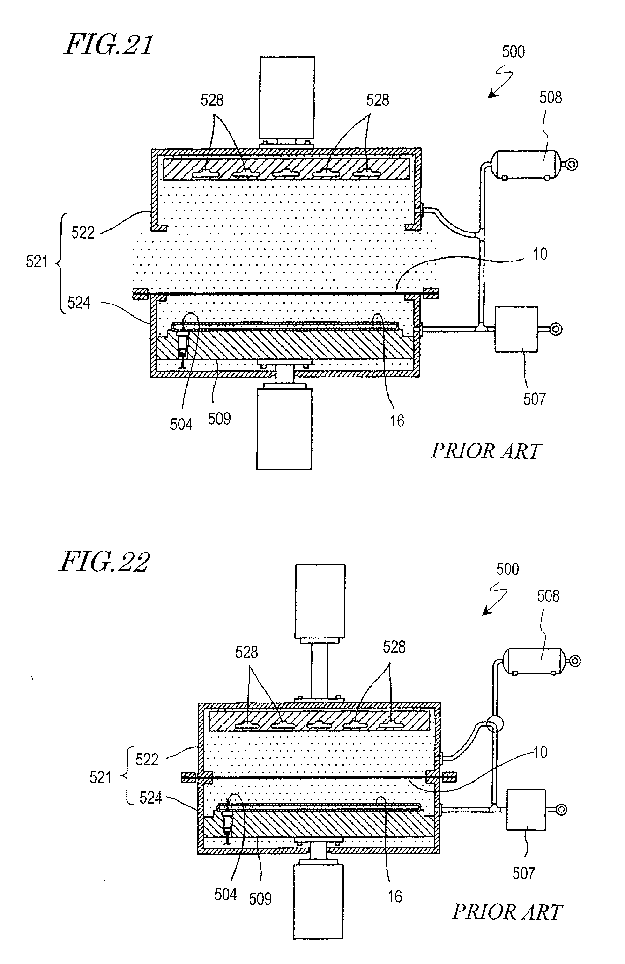

FIG. 21 illustrates a vacuum forming machine (reduced pressure coating system) 500 as disclosed in Japanese Patent Application Laid-Open Publication No. 2006-7422. The vacuum forming machine 500 includes a chamber box 521, of which the internal pressure can be increased and decreased adaptively. The chamber box 521 consists of an upper chamber box 522 and a lower chamber box 524.

Inside the upper chamber box 522, a heater 528 is arranged for heating a decorative sheet (skin member) 10. On the other hand, a table 509 for mounting a base member (core member) 16 is arranged inside the lower chamber box 524. The upper and lower chamber boxes 522 and 524 are connected to a vacuum tank 507 and a compressed air tank 508.

Now, it will be described how to attach the decorative sheet 10 using such a vacuum forming machine 500.

First of all, as shown in FIG. 21, the base member 16 is mounted on the table 509 inside the lower chamber box 524 and then the decorative sheet 10 is put on the upper surface of the lower chamber box 524.

Next, as shown in FIG. 22, the upper chamber box 522 is lowered, thereby bringing the upper and lower chamber boxes 522 and 524 into contact with each other with the decorative sheet 10 sandwiched between them. As a result, the upper and lower chamber boxes 522 and 524 are closed airtight.

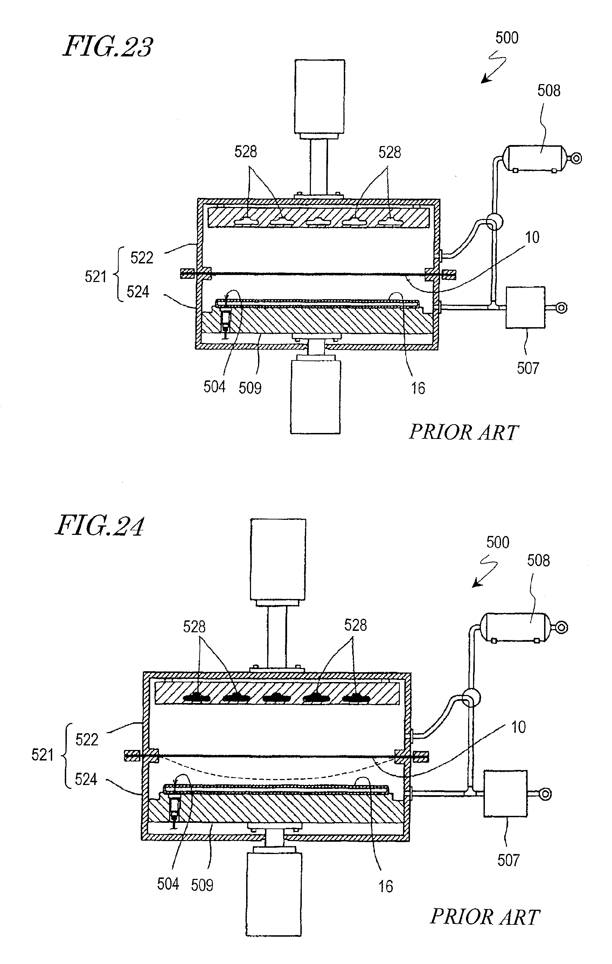

Subsequently, as shown in FIG. 23, the upper and lower chamber boxes 522 and 524 are evacuated by establishing communication with the vacuum tank 507, thereby creating a reduced pressure state (a near-vacuum very low pressure state) inside the upper and lower chamber boxes 522 and 524.

Thereafter, as shown in FIG. 24, the decorative sheet 10 is heated with the heater 528. This heating process is carried out to the point that the decorative sheet 10 softens so much that the adhesive applied on the surface of the decorative sheet 10 has a sufficient degree of adhesiveness.

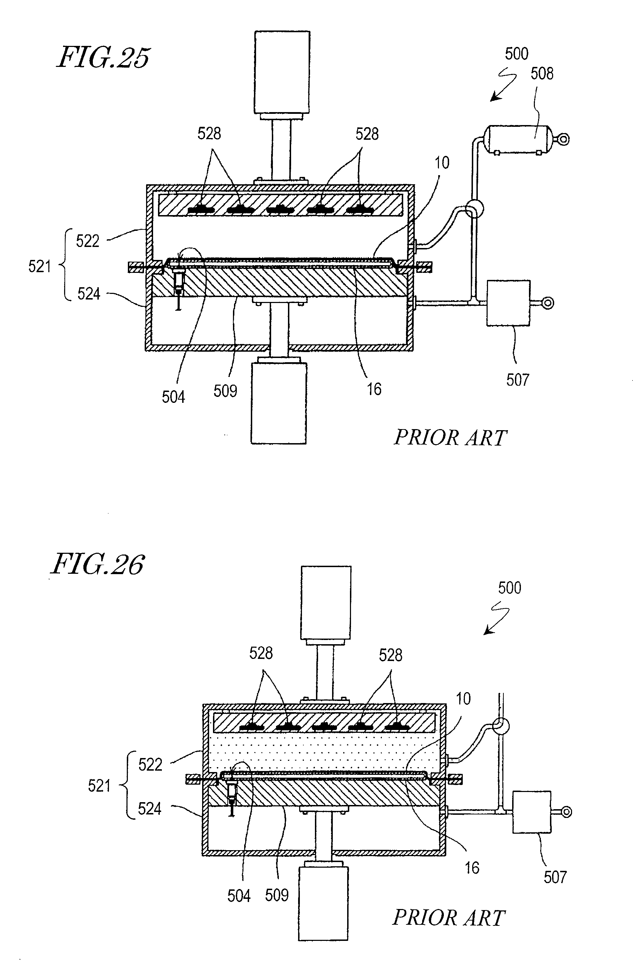

Then, as shown in FIG. 25, the table 509 inside the lower chamber box 524 is raised, thereby bringing the base member 16 into contact with the decorative sheet 10.

Next, as shown in FIG. 26, the pressure inside the upper chamber box 522 is restored to the atmospheric pressure (with the reduced pressure still maintained in the lower chamber box 524), thereby causing the decorative sheet 10 to be pressed against the base member 16 and formed to trace the surface shape of the base member 16 by taking advantage of the pressure difference between the upper and lower chamber boxes 522 and 524.

In this process step, if compressed air is introduced into the upper chamber box 522 by making the upper chamber box 522 communicate to the compressed air tank 508, the decorative sheet 10 can be pressed more strongly against the base member 16.

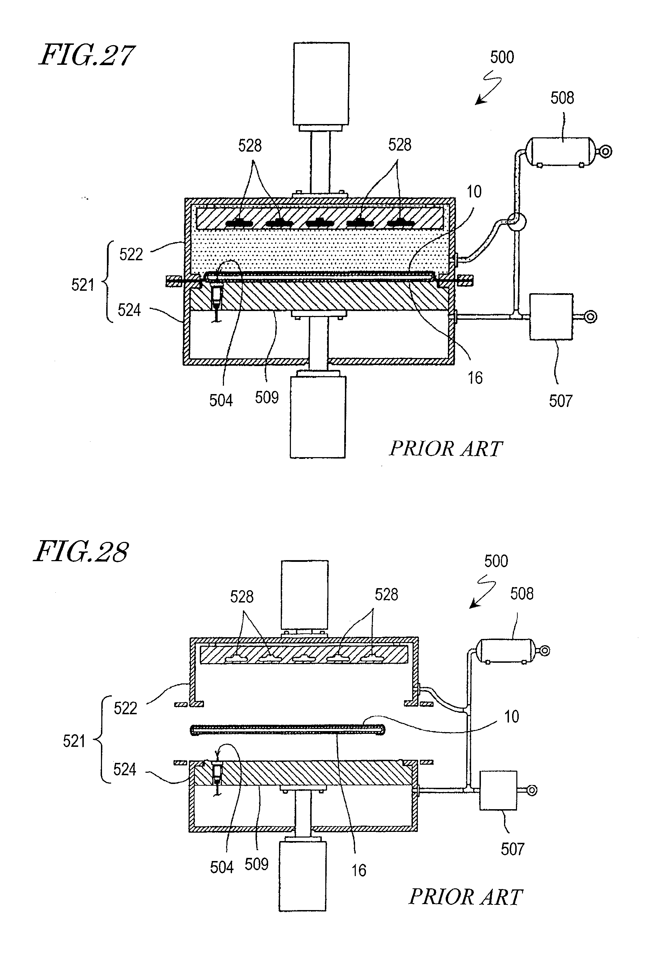

Finally, as shown in FIG. 28, after the pressure inside the lower chamber box 524 is also restored to the atmospheric pressure, the upper chamber box 522 is raised and the base member 16 coated with the decorative sheet 10 is unloaded. In this manner, a vacuum formed product consisting of the base member 16 and the decorative sheet 10 attached to its surface can be obtained.

By performing such a vacuum forming process, even a base member with a great degree of surface unevenness can be decorated easily with a beautiful sheet.

In the vacuum forming machine 500 disclosed in Japanese Patent Application Laid-Open Publication No. 2006-7422, to prevent a hollow base member 16 from expanding and bursting or collapsing under the rising pressure inside the chamber box 521, there is a communication hole 504 that maintains communication between the inside of the base member 16 and the upper chamber box 522. If the base member 16 is not a hollow one, however, a normal vacuum forming process may be carried out without using such a communication hole 504.

With the vacuum forming machine 500 disclosed in Japanese Patent Application Laid-Open Publication No. 2006-7422, however, when heated, the decorative sheet 10 will soften and sag down as indicated by the dashed curve in FIG. 24. If the forming process were carried out with the decorative sheet 10 sagged in this manner, that sagged portion of the decorative sheet 10 could contact with the base member 16 earlier than the rest of the sheet 10. In that case, the adhesive in that portion would get cured earlier and could not be stretched sufficiently and would become swollen when the decorative sheet 10 is stretched after that. That is to say, the appearance of the final vacuum formed product would be ruined by such an unnecessary raised portion. A similar problem will arise even when a vacuum forming machine (which is a picture applier) as disclosed in Japanese Patent Application Laid-Open Publication No. 63-214424 is used.

### SUMMARY OF THE INVENTION

Preferred embodiments of the present invention prevent the appearance of a final vacuum formed product, obtained by vacuum forming process using a decorative sheet, from being ruined.

A vacuum forming machine according to a preferred embodiment of the present invention is designed to attach a decorative sheet onto a base member under a reduced pressure. The vacuum forming machine preferably includes a chamber, which is configured to be loaded with the base member and the decorative sheet, a frame arranged to surround the base member that has been loaded into the chamber, a pressure reducer arranged to reduce pressure inside the chamber, and a communication path arranged to establish communication between the inside of the frame and an external space at the atmospheric pressure.

In one preferred embodiment, the vacuum forming machine preferably further includes a valve provided for the communication path and a controller programmed to control the operating condition of the valve.

In this particular preferred embodiment, the vacuum forming machine further includes an elevating mechanism arranged to raise and lower the decorative sheet with respect to the frame. The controller performs a control operation so that the valve will be opened for a specified amount of time when the decorative sheet brought by the elevating mechanism reaches a predefined distance from the frame.

In a specific preferred embodiment, the specified amount of time preferably is not less than 1 ms and not more than 100 ms, for example.

Alternatively or additionally, the predefined distance is 50 mm or less, for example.

In still another preferred embodiment, the vacuum forming machine may further include a sensor arranged to collect information about the distance between the decorative sheet and the frame. The controller controls the operating condition of the valve based on a result obtained by the sensor.

In yet another preferred embodiment, the controller performs a control operation so that the valve will be opened for a specified amount of time when a certain period of time passes since the elevating mechanism started to operate.

In yet another preferred embodiment, the pressure reducer is arranged to exhaust the air from inside of the frame into outside of the machine.

A method of making a vacuum formed product according to another preferred embodiment of the present invention includes the steps of preparing a decorative sheet and a base member, and attaching the decorative sheet onto the base member inside a chamber. The step of attaching includes the steps of putting the base member into a frame that is arranged inside the chamber, reducing the pressure inside the chamber in which the base member has been loaded, bringing the decorative sheet toward the frame inside the chamber at the reduced pressure, and maintaining communication between the inside of the frame and an external space at the atmospheric pressure for a specified amount of time when the decorative sheet reaches a predefined distance from the frame.

In one preferred embodiment, the specified amount of time preferably is not less than 1 ms and not more than 100 ms, for example.

In another preferred embodiment, the step of attaching further includes the step of pressurizing a space that extends over the decorative sheet and opposite to the frame after the step of maintaining communication has been carried out.

A vacuum forming machine according to a further preferred embodiment of the present invention includes a frame arranged to surround a base member that has been loaded into a chamber, and a communication path arranged to establish communication between the inside of the frame and an external space at the atmospheric pressure. Thus, if communication is established between the inside of the frame at a reduced pressure and the external space at the atmospheric pressure when the decorative sheet gets close to the frame, the air can be supplied through the communication path to the inside of the frame. As a result, since the pressure in the space between the decorative sheet and the base member rises, the decorative sheet can be expanded upward (i.e., away from the base member), thus preventing the decorative sheet heated and softened under the heat from sagging. Consequently, the fine appearance will not be ruined. Since the air is supplied to inside of the frame by establishing communication between the inside of the frame at the reduced pressure and the external space at the atmospheric pressure, the pressure inside the frame can be increased quickly and easily. In addition, in the vacuum forming machine according to a preferred embodiment of the present invention, the base member is surrounded with the frame. That is why just by supplying the air only to the inside of the frame, not the entire chamber, sagging of the decorative sheet can be minimized. Therefore, as the air needs to be supplied in a relatively small amount, the decorative sheet will not be cooled by the air too much to avoid decreasing the formability of the decorative sheet, either. On top of that, after the air has been supplied through the communication path, the pressure can be reduced again by a pressure reducer in a short time, and the decorative sheet can be attached quickly.

The vacuum forming machine according to a preferred embodiment of the present invention preferably further includes a valve provided for the communication path, and a controller programmed to control the operating condition (i.e., opened/closed state) of the valve. By controlling the operating condition of the valve using a controller, the communication path can be easily switched between the opened and closed states.

The vacuum forming machine according to a preferred embodiment of the present invention preferably further includes an elevating mechanism arranged to raise and lower the decorative sheet with respect to the frame. In that case, the controller performs a control operation so that the valve will be opened for a specified amount of time when the decorative sheet brought by the elevating mechanism reaches a predefined distance from the frame.

To minimize the sagging of the decorative sheet effectively with a small amount of the air supplied, the valve is preferably not opened until the decorative sheet gets sufficiently close to the frame. Thus, the predefined distance is preferably 50 mm or less, for example.

The vacuum forming machine according to a preferred embodiment of the present invention may further include a sensor arranged to collect information about the distance between the decorative sheet and the frame. In that case, the controller controls the operating condition of the valve based on a result obtained by the sensor.

Alternatively, the controller may also perform a control operation so that the valve will be opened for a specified amount of time when a certain period of time passes since the elevating mechanism started to operate.

The valve is preferably opened for not less than 1 ms and not more than 100 ms, for example. The reason is as follows. Specifically, if the valve were opened for less than just 1 ms, the amount of the air supplied could be too small to minimize sagging of the decorative sheet. On the other hand, if the valve were opened for as long as more than 100 ms, then the decorative sheet would not only become excessively swollen thus ruining its appearance, but would also have a decreased temperature because it would take a lot of time to reduce the pressure again.

According to a method of making a vacuum formed product according to a preferred embodiment of the present invention, the step of attaching a decorative sheet in a chamber includes the steps of putting a base member into a frame that is arranged inside the chamber, reducing the pressure inside the chamber in which the base member has been loaded, and bringing the decorative sheet toward the frame inside the chamber at the reduced pressure. The attaching step of the method of making a vacuum formed product according to a preferred embodiment of the present invention further includes the step of maintaining communication between the inside of the frame and an external space at the atmospheric pressure for a specified amount of time when the decorative sheet reaches a predefined distance from the frame. By performing this additional process step of maintaining communication, the pressure in the space between the decorative sheet and the base member can be increased quickly and easily by supplying the air to the inside of the frame. As a result, the decorative sheet can be expanded upward (i.e., away from the base member), thus preventing the decorative sheet heated and softened under the heat from sagging. Consequently, the fine appearance will not be ruined. In addition, in the method of making a vacuum formed product according to a preferred embodiment of the present invention, the base member is surrounded with the frame. That is why just by supplying the air only to the inside of the frame, not the entire chamber, sagging of the decorative sheet can be minimized. Therefore, as the air needs to be supplied at a relatively small amount, the decorative sheet will not be cooled by the air too much to avoid decreasing its formability, either. On top of that, after the air has been supplied by performing the process step maintaining communication, the pressure can be reduced by a pressure reducer in a short time, and the decorative sheet can be attached quickly.

In the step of maintaining communication, communication is preferably maintained between the inside of the frame and the external space at the atmospheric pressure for not less than 1 ms and not more than 100 ms, for example. The reason is as follows. Specifically, if the communication were maintained for less than just 1 ms, the amount of the air supplied could be too small to minimize sagging of the decorative sheet. On the other hand, if the communication were maintained for as long as more than 100 ms, then the decorative sheet would not only become excessively swollen thus ruining its appearance, but also would have a decreased temperature because it would take a lot of time to reduce the pressure again.

The step of attaching preferably further includes the step of pressurizing a space that extends over the decorative sheet and opposite to the frame after the step of maintaining communication has been carried out. By performing such an additional process step of pressurizing, the pressure difference that will cause the decorative sheet to be pressed against the base member can be further increased and therefore the decorative sheet can be attached even more quickly.

According to various preferred embodiments of the present invention, a vacuum formed product, which is obtained by vacuum forming process using a decorative sheet, will prevent its appearance from being ruined.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

FIG. 1 schematically illustrates a vacuum forming machine 100 according to a specific preferred embodiment of the present invention.

FIG. 2 is a perspective view schematically illustrating a frame for use in the vacuum forming machine 100.

FIG. 3 schematically illustrates a vacuum forming machine 100 according to an alternative preferred embodiment of the present invention.

FIG. 4 schematically illustrates a vacuum forming machine 100 according to another alternative preferred embodiment of the present invention.

FIGS. 5 through 11 illustrate respective manufacturing process steps to make a vacuum formed product using the vacuum forming machine 100.

FIG. 12 is a graph showing how the pressure in the upper box and the pressure inside the frame change with time after having started to be reduced in the attaching step.

FIG. 13 is a flowchart illustrating a detailed procedure of the attaching step.

FIG. 14 is a flowchart illustrating an alternative detailed procedure of the attaching step.

FIG. 15 shows the temperature dependence of the storage moduli E' that were obtained by measuring the dynamic viscoelasticity of polyvinyl chloride, polymethyl methacrylate and polycarbonate.

FIG. 16 schematically illustrates a vacuum forming machine 100 according to another preferred embodiment of the present invention.

FIG. 17 schematically illustrates a vacuum forming machine 100 according to still another preferred embodiment of the present invention.

FIG. 18 schematically illustrates a vacuum forming machine 100 according to yet another preferred embodiment of the present invention.

FIG. 19 schematically illustrates a vacuum forming machine 100 according to yet another preferred embodiment of the present invention.

FIG. 20 illustrates an example of a decorative sheet 10.

FIGS. 21 through 28 illustrate respective manufacturing process steps to make a vacuum formed product using a conventional vacuum forming machine 500.

### DETAILED DESCRIPTION OF THE PREFERRED EMBODIMENTS

Hereinafter, preferred embodiments of the present invention will be described with reference to the accompanying drawings. It should be noted, however, that the present invention is in no way limited to the specific preferred embodiments to be described below.

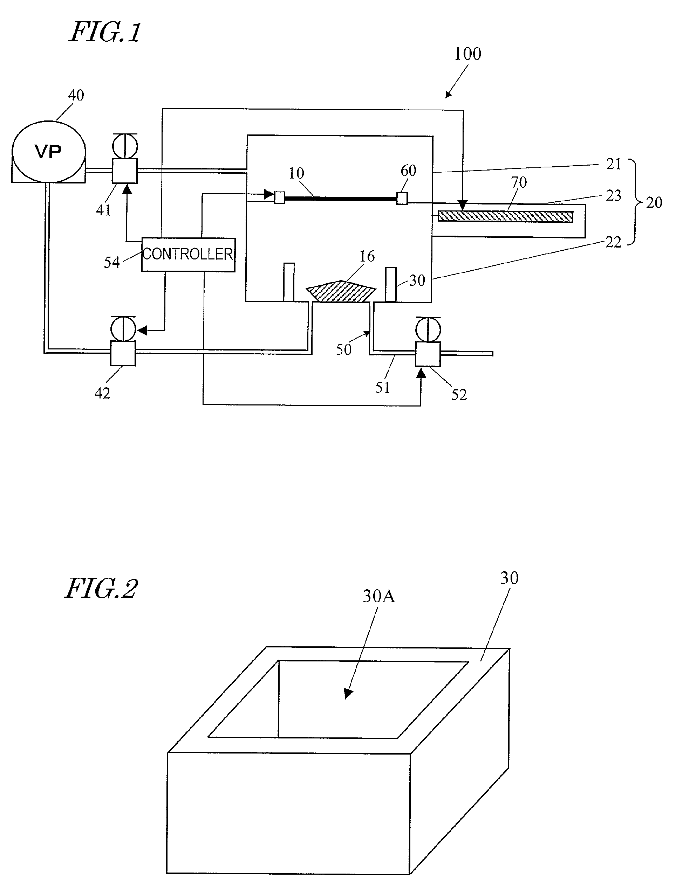

FIG. 1 illustrates a vacuum forming machine 100 according to a specific preferred embodiment of the present invention. In FIG. 1, a decorative sheet 10 and a base member 16 are also shown to make this description more easily understandable. The vacuum forming machine 100 is used to attach the decorative sheet 10 (which will be simply referred to herein as a "sheet") onto the base member 16 under a reduced pressure. That is to say, the vacuum forming machine 100 is an apparatus for making a vacuum formed product including the base member 16 and the decorative sheet 10 that has been attached onto the surface of the base member 16.

As already described with reference to FIG. 20, the decorative sheet 10 includes a decoration layer 1 and a supporting layer 2 that supports the decoration layer 1. The decoration layer 1 may be either an ink layer formed by printing or a metal layer formed by depositing a metallic material. The supporting layer 2 is made of a resin material such as polycarbonate or polyethylene terephthalate. When the sheet 10 is attached onto the base member 16, an adhesive is applied onto the surface of the sheet 10. In the following description, the supporting layer 2 that forms the body of the sheet 10 will be referred to herein as a "sheet base member". The base member 16 (which forms the body of the vacuum formed product) may be made of a resin material, a metallic material or any other suitable material.

As shown in FIG. 1, the vacuum forming machine 100 of this preferred embodiment preferably includes a chamber (i.e., a vacuum vessel) 20, which is configured to be loaded with the base member 16 and the sheet 10, a frame 30 arranged to surround the base member 16 that has been loaded into the chamber 20, a pressure reducer 40 arranged to reduce the pressure inside the chamber 20, and a communication path 50 arranged to establish communication between the inside of the frame 30 and the external space at the atmospheric pressure. The vacuum forming machine 100 further includes a holder 60 arranged to hold the sheet 10 inside the chamber 20.

The chamber 20 is partitioned by the sheet 10 and the holder 60 into an upper box 21 and a lower box 22. The upper box 21 has an opening at the bottom, while the lower box 22 has an opening at the top. And the base member 16 is put on the bottom of the lower box 22.

The chamber 20 of this preferred embodiment further includes a heater box 23 that houses a heater 70 arranged to heat the sheet 10. The heater 70 may be a far infrared heater, for example. The heater box 23 is arranged adjacent to the lower box 22. When heating the sheet 10, the heater 70 is introduced into the lower box 22.

The frame 30 is arranged inside the lower box 22. More specifically, the frame 30 is put on the bottom surface of the lower box 22. The frame 30 preferably has a cylindrical shape (e.g., a rectangular cylindrical shape in this preferred embodiment) as shown in FIG. 2, and the base member 16 is put into the space 30A inside the frame 30. As shown in FIG. 1, the frame 30 extends from the bottom surface of the lower box 22 to reach a higher level than the top of the base member 16. In other words, the top of the frame 30 is located higher than that of the base member 16. The frame 30 may be made of a resin material such as polypropylene (PP), polytetrafluoroethylene (PTFE) or polyethylene (PE) or a metallic material such as aluminum. The top of the frame 30 is preferably higher than that of the base member 16 by at least 10 mm (e.g., approximately 20 mm). This is because if the difference in height between the respective tops of the frame 30 and the base member 16 were less than 10 mm, then the sheet 10 could not be attached to the base member 16 just as intended and the final vacuum formed product could have its appearance marred.

The pressure reducer 40 is typically a vacuum pump. A first valve 41 arranged to adjust the degree of pressure reduction inside the upper box 21 is provided between the pressure reducer 40 and the upper box 21. The air inside the upper box 21 is exhausted through the first valve 41. On the other hand, a second valve 42 arranged to adjust the degree of pressure reduction inside the lower box 22 is provided between the pressure reducer 40 and the lower box 22. The air inside the lower box 22 is exhausted through the second valve 42. Specifically, the air is exhausted from inside of the frame 30.

The communication path 50 preferably includes the inner space of a communication tube 51 that connects the inside of the frame 30 and the external space together, and is provided with a third valve 52. When the third valve 52 is opened, the communication path 50 establishes communication between the inside of the frame 30 and the external space. On the other hand, when the third valve 52 is closed, the inside of the frame 30 is isolated from the external space. In this preferred embodiment, the operating condition (i.e., opened/closed state) of the third valve 52 is preferably controlled by the controller 54. In other words, the vacuum forming machine 100 includes a controller 54 programmed to control the operating condition of the third valve 52.

The controller 54 of this preferred embodiment preferably controls not only the operating condition of the third valve 52 on the communication path 50 but also that of the first valve 41 arranged between the pressure reducer 40 and the upper box 21 and that of the second valve 42 arranged between the pressure reducer 40 and the lower box 22. The controller 54 may be implemented as a microcomputer, for example.

The holder 60 preferably includes a ring-shaped (such as square ring) member that can hold and grip the periphery of the sheet 10 and that can be raised or lowered vertically while holding the sheet 10. That is to say, the holder 60 functions as an elevating mechanism to raise and lower the sheet 10 with respect to the frame 30 (or the base member 16).

As described above, the vacuum forming machine 100 of this preferred embodiment includes the frame 30, which surrounds the base member 16 that has been loaded into the chamber 20, and the communication path 50 arranged to establish communication between the inside of the frame 30 and the external space at the atmospheric pressure. Thus, if communication is established between the inside of the frame 30 at a reduced pressure and the external space at the atmospheric pressure when the sheet 10 gets close to the frame 30, the air can be supplied through the communication path 50 to the inside of the frame 30. As a result, since the pressure in the space between the sheet 10 and the base member 16 rises, the sheet 10 can be expanded upward (i.e., away from the base member 16), thus preventing the sheet 10 heated and softened under the heat from sagging. Consequently, the fine appearance will not be ruined or the sheet will not be attached imperfectly, either.

The pressure inside the frame 30 could be increased (i.e., restored to an ordinary pressure) even by controlling the operating condition of the second valve 42 between the lower box 22 and the pressure reducer 40. In that case, however, it would be difficult to quickly raise the pressure high enough to reduce sagging of the sheet 10 sufficiently. In the vacuum forming machine 100 of this preferred embodiment, on the other hand, the air is supplied to the inside of the frame 30 by establishing communication between the inside of the frame 30 at a reduced pressure and the external space at the atmospheric pressure, and therefore, the pressure inside the frame 30 can be increased easily and quickly.

In addition, in the vacuum forming machine 100 of this preferred embodiment, the base member 16 is surrounded with the frame 30. That is why just by supplying the air only to the inside of the frame 30, not the entire chamber 20, sagging of the sheet 10 can be minimized. Therefore, as the air needs to be supplied at a relatively small amount, the sheet 10 will not be cooled by the air too much to avoid decreasing the formability of the sheet 10, either. On top of that, after the air has been supplied through the communication path 50, the pressure can be reduced again by the pressure reducer 40 in a short time, and the sheet 10 can be attached quickly.

The vacuum forming machine 100 preferably includes the third valve 52 provided for the communication path 50 and the controller 54 arranged to control the operating condition of the third valve 52 as in the preferred embodiment described above. By controlling the operating condition of the third valve 52 using the controller 54, the communication path 50 can be easily switched between the opened and closed states.

The vacuum forming machine 100 of this preferred embodiment further includes an elevating mechanism (i.e., the holder 60) to raise and lower the sheet 10 with respect to the frame 30. The controller 54 performs a control operation so that the third valve 52 will be opened for a specified amount of time when the sheet 10 brought down by the holder 60 functioning as an elevating mechanism reaches a predefined distance from the frame 30. To minimize the sagging of the sheet 10 effectively with a small amount of the air supplied, the third valve 52 is preferably not opened until the sheet 10 gets sufficiently close to the frame 30. Specifically, when the third valve 52 is opened, the distance between the sheet 10 and the frame 30 is preferably 50 mm or less, more preferably 30 mm or less.

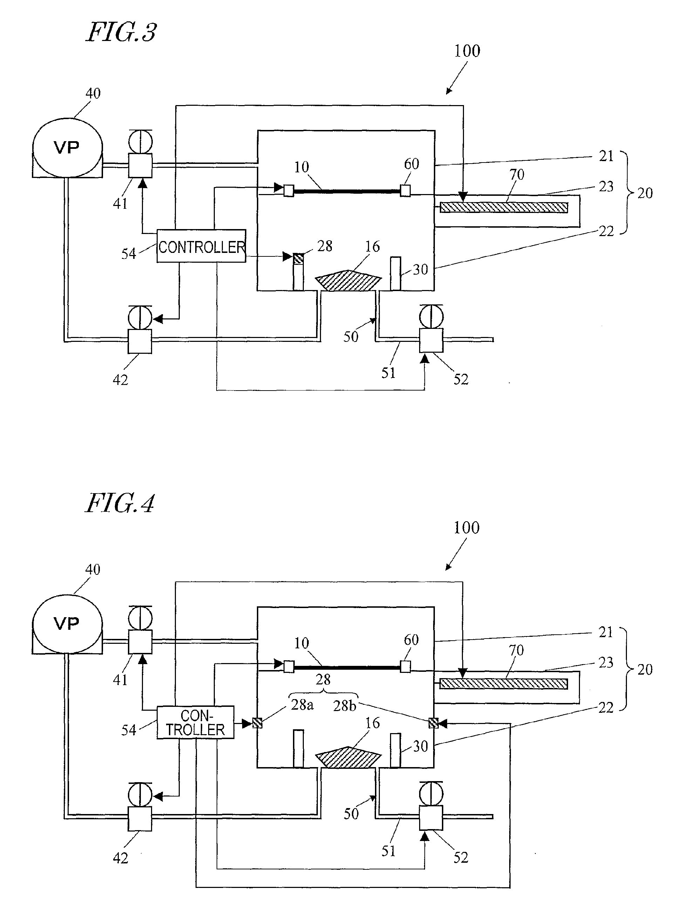

Information about the distance between the sheet 10 and the frame 30 may be collected by a sensor 28 arranged inside the chamber 20 as shown in FIG. 3, for example. In that case, the controller 54 controls the operating condition of the third valve 52 based on a result obtained by the sensor 28. That is to say, on determining, based on a result obtained by the sensor 28, that the sheet 10 has reached a predefined distance from the frame 30, the controller 54 performs a control operation so that the third valve 52 will be opened for a specified amount of time.

Any of various kinds of distance sensors or proximity sensors may be used as the sensor 28. Alternatively, a photoelectric tube sensor may also be used. If a photoelectric tube sensor is used as the sensor 28, a transmitter 28a and a receiver 28b are preferably arranged at a predetermined height so as to face each other as shown in FIG. 4. And when the signal transmitted by the transmitter 28a discontinues (i.e., no longer received at the receiver 28b), it is determined that the sheet 10 and the holder 60 have reached a predetermined height (i.e., are now located between the transmitter 28a and the receiver 28b). As the photoelectric tube sensor, a beam sensor NX5-M10RA produced by Sunx Limited may be used, for example.

Alternatively, the controller 54 may also control the operating condition of the valve 52 according to the amount of time that has passed since the holder 60 (and the sheet 10) started to be lowered, instead of the distance between the sheet 10 and the frame 30. In other words, the controller 54 may perform a control operation so that the third valve 52 will be opened for a specified amount of time when a certain period of time passes since the elevating mechanism (i.e., the holder 60 in this example) started to operate. For example, the controller 54 may perform a control operation so that the third valve 52 will be opened one second after the holder 60 started to be lowered.

The third valve 52 is preferably opened for not less than 1 ms and not more than 100 ms, for example. The reason is as follows. Specifically, if the third valve 52 were opened for less than just 1 ms, the amount of the air supplied could be too small to minimize sagging of the sheet 10. On the other hand, if the third valve 52 were opened for as long as more than 100 ms, then the sheet 10 would not only become too swollen to avoid ruining its appearance, but also have its temperature and degree of formability decreased because it would take a lot of time to reduce the pressure again.

Next, it will be described how to make a vacuum formed product using the vacuum forming machine 100 described above. The manufacturing process of this preferred embodiment includes at least the step of preparing the sheet 10 and the base member 16 and the step of attaching the sheet 10 onto the base member 16 in the chamber 20 while forming the sheet 10.

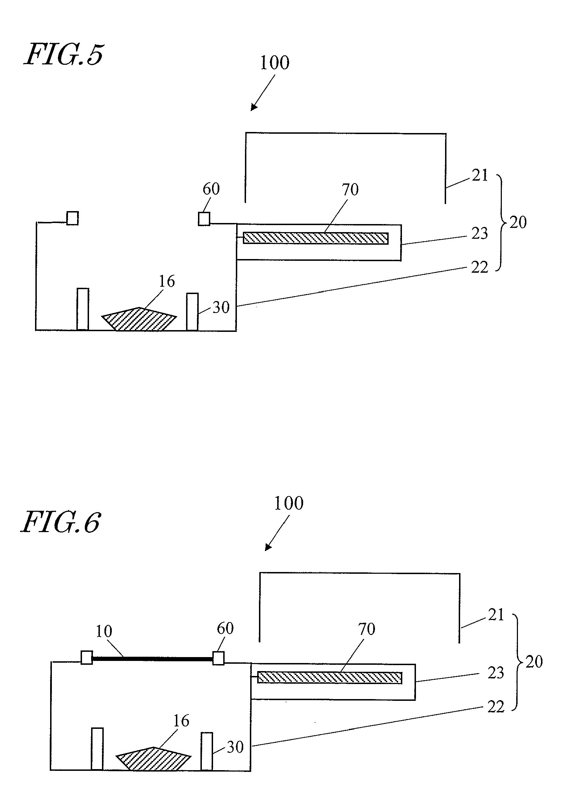

Hereinafter, the manufacturing process will be described in detail with reference to FIGS. 5 through 11, which are cross-sectional views illustrating respective process steps to make a vacuum formed product. It should be noted that in FIGS. 5 to 11, some members of the vacuum forming machine 100 are not illustrated.

First of all, the sheet 10 and the base member 16 are prepared (this process step will be referred to herein as a "preparing step"). As described above, the sheet 10 includes a decoration layer 1 and a sheet base member (supporting layer) 2 that supports the decoration layer 1. The decoration layer 1 may be either an ink layer formed by printing or a metal layer formed by depositing a metallic material, for example. The decoration layer 1 does not have to be a single layer but may also have a multilayer structure in which an ink layer, a metal layer, and other layers have been stacked one upon the other. The sheet base member 2 preferably is made of a resin material such as polycarbonate or polyethylene terephthalate, for example. The base member 16 is typically made of a resin material as described above but may also be made of a metallic material or any other suitable material. The base member 16 can be made by any known process. For example, the base member 16 may be made of a resin material by injection molding process. As the resin material, an ABS resin or an AES resin is generally preferred but nylon is preferably used in view of its thermal resistance. Also, taking the environmental issues into consideration, an olefin-based recycled material or polyethylene is preferably used.

Next, the sheet 10 is attached onto the base member 16 while being stretched (i.e., formed). This process step will be referred to herein as an "attaching step". Specifically, first, the base member 16 is put into the frame 30 that is arranged inside the chamber 20 as shown in FIG. 5. More specifically, the base member 16 is mounted onto the bottom surface of the lower box 22 so as to be surrounded with the frame 30. In this case, the top of the frame 30 is located at a higher level than that of the base member 16 mounted.

Subsequently, as shown in FIG. 6, the sheet 10 is fixed onto the holder 11. In process step, an adhesive has been applied to one of the two surfaces of the sheet 10.

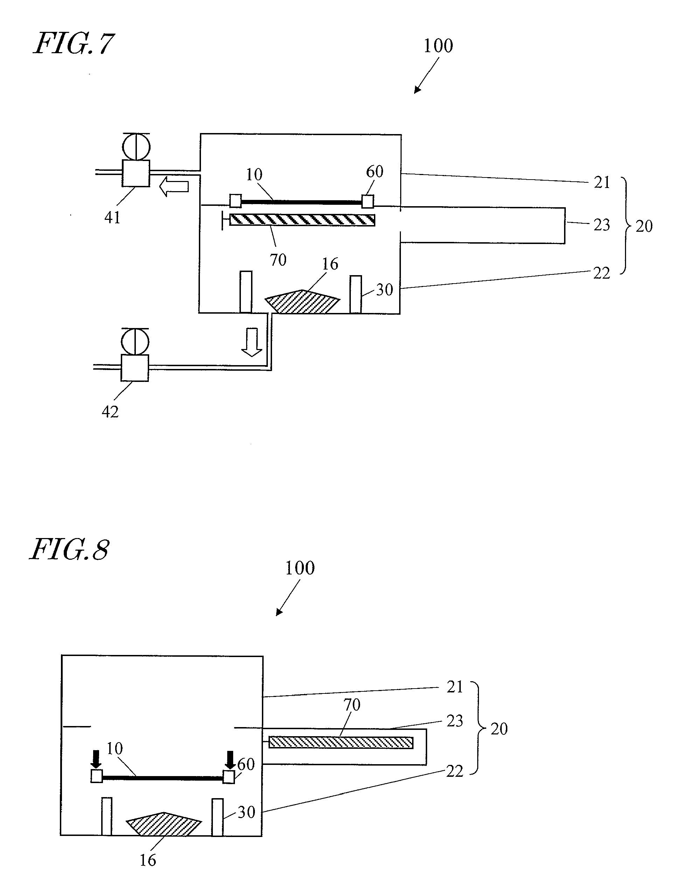

Thereafter, as shown in FIG. 7, the sheet 10 is heated with the heater 70. To soften the sheet 10 sufficiently, the sheet 10 is preferably heated to a temperature falling within the range of approximately (T_{A}-40) °C to (T_{A}+50) °C, more preferably to a temperature falling within the range of approximately (T_{A}+ 30) °C to (T_{A}+50°C), where T_{A} indicates the load deflection temperature of the sheet base member 2. Also, in this process step, the pressure inside the chamber 20, i.e., inside the upper and lower boxes 21 and 22, is reduced.

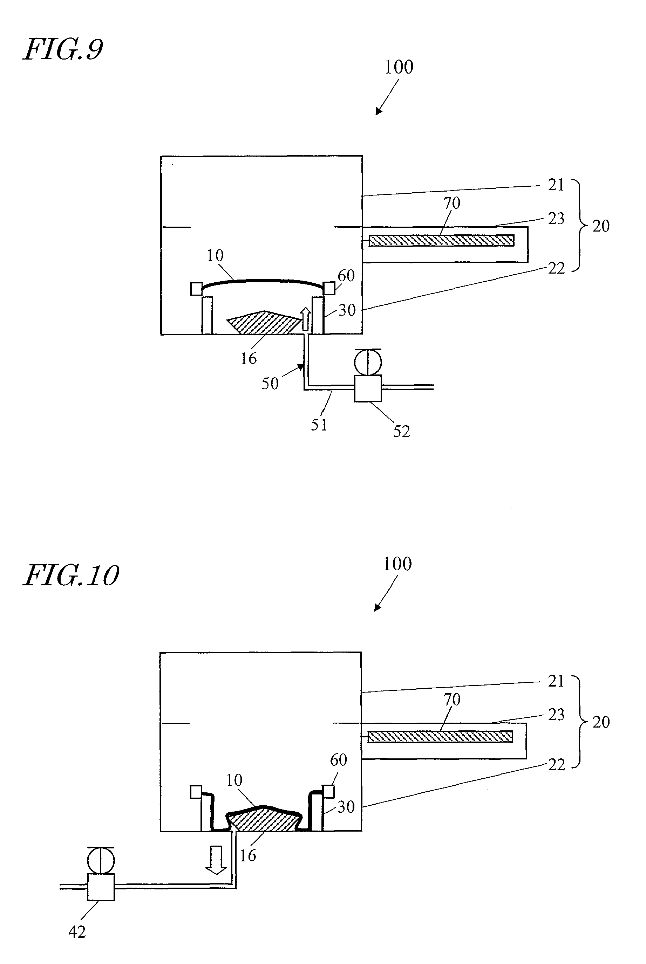

Next, as shown in FIG. 8, the sheet 10, as well as the holder 60, is brought down toward the frame 30. And when the sheet 10 reaches a predefined distance from the frame 30, communication is established between the inside of the frame 30 and the external space at the atmospheric pressure and maintained for a specified amount of time as shown in FIG. 9. By establishing communication between the inside of the frame 30 and the external space, the air is supplied from the external space into the frame 30. As a result, the pressure in the space inside the frame 30 (i.e., the space between the sheet 10 and the base member 16) rises and the sheet 10 becomes expanded upward (i.e., away from the base member 16) as shown in FIG. 9.

Thereafter, when the sheet 10 is brought down to the point that the sheet 10 contacts with the frame 30 (and when the communication between the inside of the frame 30 and the external space is discontinued just before or after that), the sheet 10 is pressed against, and bonded to, the base member 16 as shown in FIG. 10 because the pressure is still kept low. During this bonding, the sheet 10 is attached while being formed so as to trace the surface shape of the base member 16.

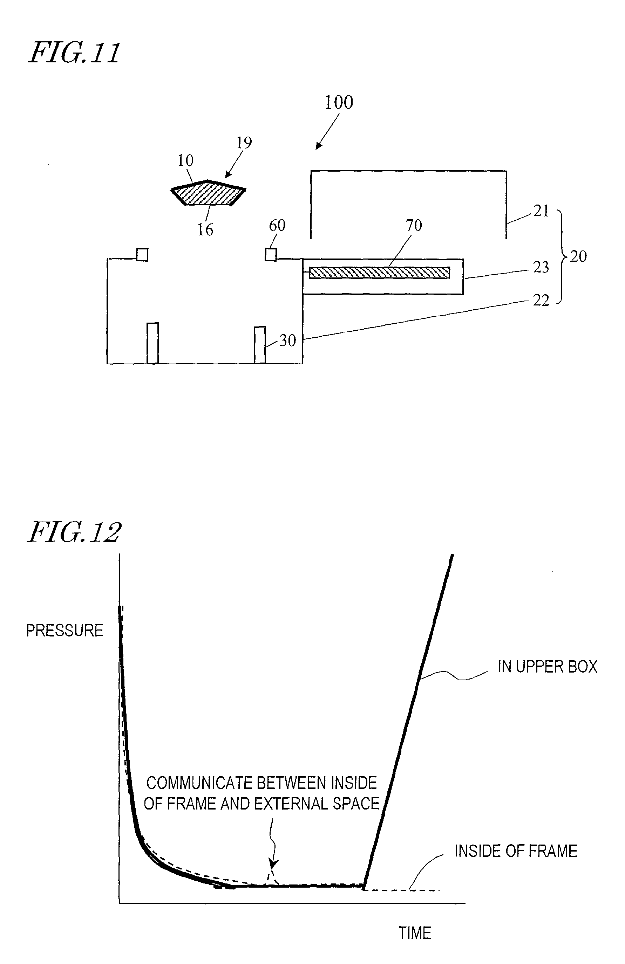

After that, excessive portions of the sheet 10 (i.e., portions that do not cover the base member 16 but extend over the member 16) are cut off (or trimmed) with some cutter such as a rotary blade, thereby completing a vacuum formed product 19 including the base member 16 and the decorative sheet 10 that has been attached onto the surface of the base member 16 as shown in FIG. 11.

In the manufacturing process of this preferred embodiment, the attaching step includes the steps of putting the base member 16 into the frame 30 that is arranged inside the chamber 20, reducing the pressure inside the chamber 20 in which the base member 16 has been loaded, and bringing the sheet 10 toward the frame 30 inside the chamber 20 at the reduced pressure. The attaching step of the manufacturing process of this preferred embodiment further includes the step of maintaining communication between the inside of the frame 30 and the external space at the atmospheric pressure for a specified amount of time when the sheet 10 reaches a predefined distance from the frame 30.

By performing this additional process step of maintaining communication, the pressure in the space between the sheet 10 and the base member 16 can be increased quickly and easily by supplying the air to the inside of the frame 30. As a result, the sheet 10 can be expanded upward (i.e., away from the base member 16), thus preventing the sheet 10 heated and softened under the heat from sagging. Consequently, the fine appearance will not be ruined.

In addition, in the manufacturing process of this preferred embodiment, the base member 16 is surrounded with the frame 30. That is why just by supplying the air only to the inside of the frame 30, not the entire chamber 20, sagging of the sheet 10 can be minimized. Therefore, as the air needs to be supplied at a relatively small amount, the sheet 10 will not be cooled by the air too much to avoid decreasing its formability, either. On top of that, after the air has been supplied by performing the process step of maintaining communication, the pressure can be reduced again by the pressure reducer 40 in a short time, and the sheet 10 can be attached quickly.

The step of attaching preferably further includes the step of pressurizing a space that spreads over the sheet 10 and opposite to the frame 30 after the step of maintaining communication has been carried out. By performing such an additional process step of pressurizing, the pressure difference that will cause the sheet 10 to be pressed against the base member 16 can be further increased and therefore the sheet 10 can be attached even more quickly. This process step of pressurizing may be carried out by supplying compressed air from a compressor (not shown) into the upper box 21, for example.

FIG. 12 shows how the pressure inside the chamber 20 changes with time after having started to be reduced in the attaching step. In FIG. 12, the pressure inside the upper box 21 is indicated by the solid curve, while the pressure inside the frame 30 is indicated by the dashed curve.

As shown in FIG. 12, after the pressure has started to be reduced, the pressures inside the upper box 21 and inside the frame 30 fall in a similar pattern for a while. Specifically, the pressures inside the upper box 21 and inside the frame 30 fall to a gauge pressure (that is the difference from the atmospheric pressure) of -90 kPa to -100 kPa.

Next, the sheet 10 starts to be lowered. And when the sheet 10 reaches a predefined distance from the frame 30, communication is established between the inside of the frame 30 and the external space. As a result, the pressure inside the frame 30 becomes higher than the pressure inside the upper box 21 preferably by more than 0 Pa but equal to or smaller than 0.1 kPa. This is because if the pressure difference exceeded 0.1 kPa, the sheet 10 might be swollen too much to avoid ruining its appearance.

Then, after the sheet 10 has contacted with the frame 30, the pressure inside the upper box 21 becomes higher than the pressure inside the frame 30. Consequently, the sheet 10 becomes pressed against the base member 16 heavily and becomes bonded to the base member 16 quickly.

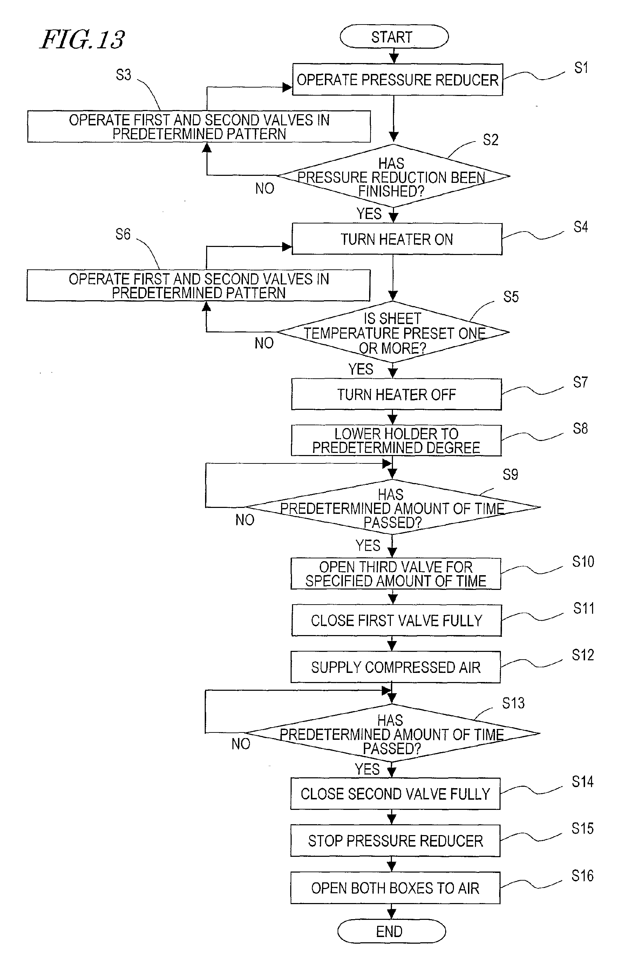

Hereinafter, the attaching step will be described in further detail with reference to FIG. 13, which is a flowchart showing more detailed process steps of the attaching step.

By turning switch of the vacuum forming machine 100 ON, the attaching step starts. After that, first of all, the pressure reducer 40 (which is typically a vacuum pump) is driven in Step S1.

Next, it is determined in Step S2 whether or not pressure reduction (or evacuation) has been finished. This decision is made based on a result obtained by a number of pressure sensors for detecting the pressures inside the upper and lower boxes 21 and 22. If the pressure value detected by the pressure sensors is equal to or smaller than a predetermined value (of -95 kPa or less), it is determined that the pressure reduction has been finished.

Until the pressure reduction is done, the first and second valves 41 and 42 are operated in a predetermined pattern that is stored in the controller 54 (in Step S3). Specifically, the first and second valves 41 and 42 are controlled to be opened to a target degree at a predetermined rate and then maintain their target degree of opening. The rate of opening the first and second valves 41 and 42 and their target degree of opening have been determined in advance so that the pressure difference between the upper and lower boxes 21 and 22 falls within a predetermined range (3 kPa or less, for example).

This process step S3 will be performed a number of times until the pressure reduction is completed. By starting the process step S3, the degrees of opening of the first and second valves 41 and 42 start to increase and the pressures inside the upper and lower boxes 21 and 22 fall to approximately -90 kPa to - 100 kPa. Optionally, when the process step S3 is carried out for the second time and on, the rate of opening the first and second valves 41 and 42 and their target degree of opening may be adjusted based on a result obtained by the pressure sensors.

And when the pressure reduction is done, the heater 70 is turned ON, thereby starting to heat the sheet 10 with the heater 70(in Step S4). As a result, the temperature of the sheet 10 starts to rise.

Next, it is determined in Step S5 whether or not the temperature of the sheet 10 is equal to or higher than a preset one. This decision is made based on a result obtained by a temperature sensor (e.g., an infrared sensor) arranged to sense the temperature of the sheet 10. As used herein, the "preset temperature" is a preferred forming temperature at which the sheet 10 softens sufficiently. If the sheet base member 2 is made of polycarbonate, the preset temperature may be approximately 190 °C, for example.

Until the temperature of the sheet 10 reaches the preset one, the first and second valves 41 and 42 are operated as in the process step S3 in a predetermined pattern that is stored in the controller 54 (in Step S6).

And when the temperature of the sheet 10 reaches the predefined one or more, the heater 70 is turned OFF to end the heating process using the heater 70 (in Step S7).

Thereafter, the holder 60 is lowered to a predetermined degree, thereby bringing the sheet 10 down in Step S8. In this process step, the holder 60 may be lowered until the sheet 10 contacts with the frame 30, for example.

Next, it is determined in Step S9 whether or not a predetermined amount of time (of one second, for example) has passed since the holder 60 started to be lowered.

When the predetermined amount of time passes, the third valve 52 will be opened for a specified amount of time (which is preferably not less than 1 ms and not more than 100 ms) in Step S10. As a result, the air is supplied from the external space to the inside of the frame 30 through the communication path 50 and the pressure inside the frame 30 rises. Meanwhile, since the pressure reduction (or evacuation) using the second valve 42 is still continued, the air supplied is soon exhausted and the pressure inside the frame 30 that has once temporarily risen falls quickly. As a result, it is possible to avoid an unwanted situation where the air remains between the attached sheet 10 and the base member 16.

Thereafter, the first valve 41 is closed fully in Step S11 and compressed air is supplied into the upper box 21 using a compressor (in Step S12). As a result, the pressure inside the upper box 21 becomes higher than the one inside the frame 30.

After the pressure inside the upper box 21 has been increased to approximately 200 kPa, for example, the next process step needs to wait a predetermined amount of time for the sheet to be attached just as intended. For that purpose, it is determined in Step S13 whether or not a predetermined amount of time (of two seconds, for example) has passed since the pressure was increased.

When the predetermined amount of time passes, the second valve 42 is closed fully in Step S14 and the pressure reducer 40 is stopped in Step S15.

Thereafter, the upper and lower boxes 21 and 22 are opened to the air (in Step S16). As a result, the pressures inside the upper and lower boxes 21 and 22 become equal to the atmospheric pressure and the attaching step ends.

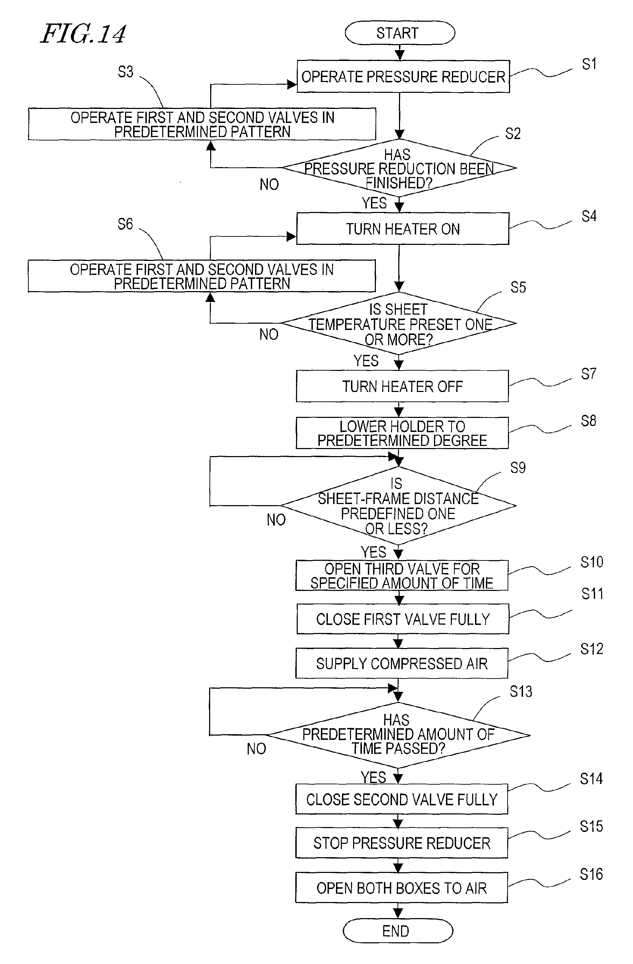

In the flowchart shown in FIG. 13, the controller 54 controls the operating condition of the third valve 52 based on the amount of time that has passed since the holder 60 started to be lowered, and determines in Step S9 whether or not a specified amount of time has passed since the holder 60 started to be lowered. However, the controller 54 may also control the operating condition of the third valve 52 by reference to (information about) the distance between the sheet 10 and the frame 30 as described above. In that case, as shown in FIG. 14, it is determined in Step S9 whether or not the distance between the sheet 10 and the frame 30 is equal to or smaller than a predefined one (50 mm, for example).

As described above, according to various preferred embodiments of the present invention, it is possible to prevent a vacuum formed product, which is being manufactured by vacuum forming process using the decorative sheet 10, from having its appearance ruined. Preferred embodiments of the present invention are applicable to a vacuum forming process that uses any of various kinds of decorative sheets 10. Among other things, preferred embodiments of the present invention can be used particularly effectively when the decorative sheet 10 needs to be formed at a relatively high temperature and within a narrow temperature range.

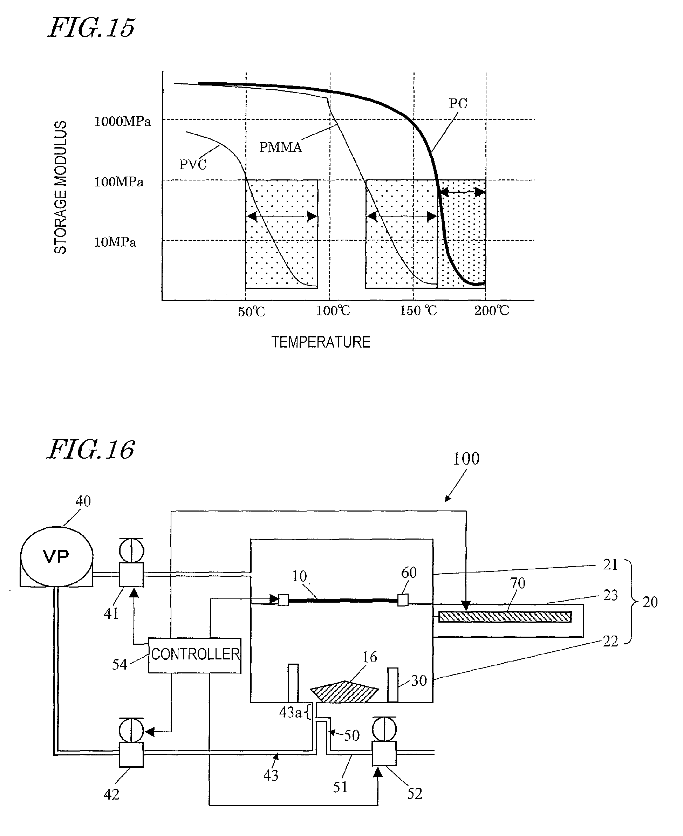

The preferred temperature range for forming the decorative sheet 10 varies according to the resin material of the sheet base member 2. FIG. 15 shows the temperature dependence of the storage moduli E' (corresponding to the moduli of elasticity) that were obtained by measuring the dynamic viscoelasticity of polyvinyl chloride (PVC), polymethylmethacrylate (PMMA) and polycarbonate (PC).

The decorative sheet 10 is preferably formed at such a temperature at which the sheet base member 2 has a storage modulus E' of 100 MPa or less, for example. That is to say, according to the curves representing the moduli of elasticity shown in FIG. 15, the broader the temperature range in which the storage modulus is preferably 100 MPa or less (which will be referred to herein as a "formable range"), i.e., the less steep its gradient, and the closer to lower temperatures the temperature range, the more easily the forming process should be done. As can be seen from FIG. 15, the formable range of PVC is from 50 °C through 90 °C but those of PMMA and PC are from 120 °C through 170 °C and from 170 °C through 200 °C, respectively. These results reveal that if the sheet base member 2 is made of PMMA, the vacuum forming process is more difficult to be done than a situation where the sheet base member 2 is made of PVC. Also, if the sheet base member 2 is made of PC, the vacuum forming process is even more difficult to complete. That is to say, advantages of preferred embodiments of the present invention will be especially advantageous if the sheet base member 2 is made of a material, of which the formable range has a relatively high lower limit (more specifically, if the sheet base member 2 is made of a material of which the formable range has a lower limit of 150 °C or more (e.g., PC).

The conventional vacuum forming machine does not perform a control such that when the sheet 10 reaches a predefined distance from the base member 16, the space between the sheet 10 and the base member 16 has its pressure increased momentarily. This is because the conventional vacuum forming machine supposes the sheet base member 2 to be made of easily formable PVC. According to a preferred embodiment of the present invention, on the other hand, even if the sheet base member 2 is made of PC that is rather difficult to form, the vacuum forming process can also be done just as intended.

It should be noted that the configuration for maintaining communication between the inside of the frame 30 and the external space does not have to be the one shown in FIG. 1. An alternative configuration for the vacuum forming machine 100 of this preferred embodiment is shown in FIG. 16. In the configuration shown in FIG. 1, the communication path 50 arranged to establish and maintain communication between the inside of the frame 30 and the external space is provided totally independently of the vacuum path to reduce the pressure inside the lower box 22. On the other hand, in the configuration shown in FIG. 16, a portion 43a of the communication path 43 arranged to establish and maintain communication between the lower box 22 and the pressure reducer 40 also functions as a portion of the communication path 50 to maintain communication between the inside of the frame 30 and the external space. Even if such a configuration is adopted, the air can still be supplied into the frame 30 and sagging of the sheet 10 can also be minimized.

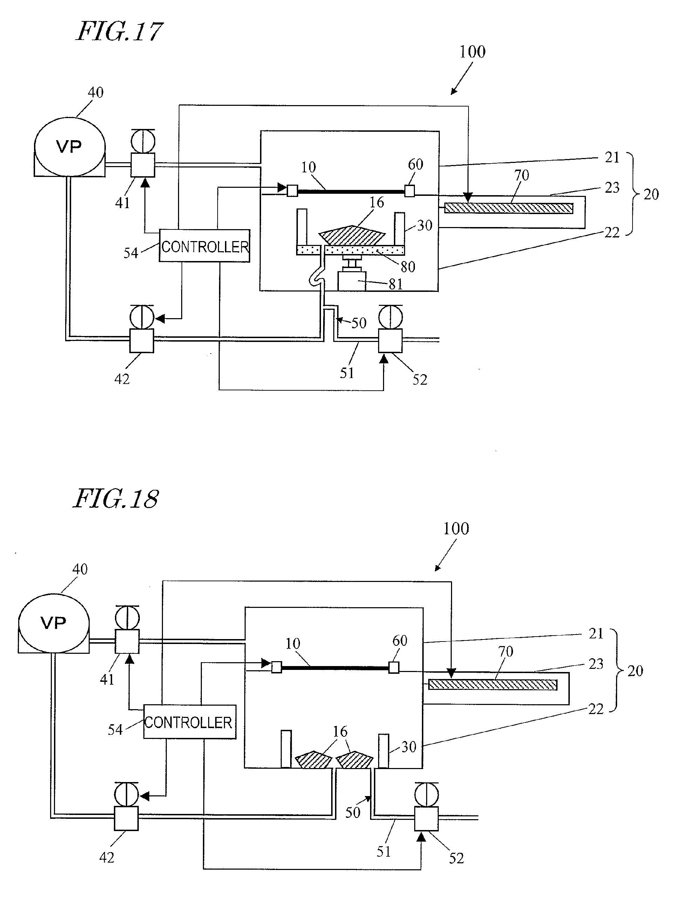

In the preferred embodiments described above, the holder 60 is preferably arranged to function as an elevating mechanism (i.e., the sheet 10 is preferably lowered along with the holder 60). Conversely, the base member 16 and the frame 30 may be raised. In that case, a table (or a supporting stage) 80 that supports the base member 16 and the frame 30 may be arranged inside the lower box 22 and the base member 16 and the frame 30 may be raised along with that table 80 using a hydraulic cylinder 81 as shown in FIG. 17.

Furthermore, in FIG. 1 and other drawings, only one base member 16 is preferably loaded into the frame 30. Alternatively, a number of base members 16 may be loaded into the frame 30 as shown in FIG. 18. By loading a number of base members 16 at a time into the frame 30, more vacuum formed products 19 can be obtained per attaching step, and therefore, the manufacturing cost can be reduced.

Furthermore, in the preferred embodiments described above, the chamber 20 preferably includes a heater box 23. However, the present invention is in no way limited to that specific preferred embodiment. Alternatively, the heater 70 may be arranged inside the upper box 21 and the heater box 23 may be omitted as shown in FIG. 19.

A vacuum formed product 19 made by the manufacturing process according to a preferred embodiment of the present invention has a fine appearance and can be used effectively as an exterior member for various types of transportation vehicles. The formed product can be used effectively as the tank housing, front fender or tail cowl of a motorcycle, for example.

According to various preferred embodiments of the present invention, it is possible to prevent the appearance of a vacuum formed product, obtained by performing a vacuum forming process using a decorative sheet, from being ruined and also prevent the decorative sheet from being attached imperfectly during that process.

A vacuum formed product obtained with the vacuum forming machine according to various preferred embodiments of the present invention or by the method of making a vacuum formed product according to other preferred embodiments the present invention has such a fine appearance so as to be used effectively as an exterior member for various types of transportation vehicles including passenger cars, buses, trucks, motorcycles, tractors, airplanes, motorboats, and civil engineering vehicles.

While the present invention has been described with respect to preferred embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the true spirit and scope of the invention.

## Claims

1. A vacuum forming machine for attaching a decorative sheet onto a base member, the vacuum forming machine comprising:
a chamber configured to be loaded with the base member and the decorative sheet;
a frame arranged to surround the base member that has been loaded into the chamber;
a pressure reducer arranged to reduce pressure inside the chamber; and
a communication path arranged to establish communication between an inside of the frame and an external space at atmospheric pressure.

2. The vacuum forming machine of claim 1, further comprising a valve provided in the communication path, and a controller programmed to control an operating condition of the valve.

3. The vacuum forming machine of claim 2, further comprising an elevating mechanism arranged to raise and lower the decorative sheet with respect to the frame, wherein the controller is programmed to perform a control operation so that the valve will be opened for a specified amount of time when the decorative sheet brought by the elevating mechanism reaches a predefined distance from the frame.

4. The vacuum forming machine of claim 3, wherein the specified amount of time is not less than 1 ms and not more than 100 ms.

5. The vacuum forming machine of claim 3 or 4, wherein the predefined distance is 50 mm or less.

6. The vacuum forming machine of one of claims 3 to 5, further comprising a sensor arranged to collect information about the distance between the decorative sheet and the frame, wherein the controller is programmed to control the operating condition of the valve based on a result obtained by the sensor.

7. The vacuum forming machine of one of claims 3 to 5, wherein the controller is programmed to perform a control operation so that the valve will be opened for a specified amount of time when a certain period of time passes since the elevating mechanism started to operate.

8. The vacuum forming machine of one of claims 1 to 7, wherein the pressure reducer is arranged to exhaust air from inside of the frame to outside of the machine.

9. A method of making a vacuum formed product, the method comprising the steps of:
preparing a decorative sheet and a base member; and
attaching the decorative sheet onto the base member inside a chamber; wherein
the step of attaching includes the steps of:
(a) putting the base member into a frame that is arranged inside the chamber;
(b) reducing pressure inside the chamber in which the base member has been loaded;
(c) bringing the decorative sheet toward the frame inside the chamber at the reduced pressure; and
(d) maintaining communication between an inside of the frame and an external space at atmospheric pressure for a specified amount of time when the decorative sheet reaches a predefined distance from the frame.

10. The method of claim 9, wherein the specified amount of time is not less than 1 ms and not more than 100 ms.

11. The method of claim 9 or 10, wherein the step of attaching further includes a step (e) of pressurizing a space that extends over the decorative sheet and opposite to the frame after the step (d) has been carried out.
